## Europäisches Patentamt
## European Patent Office
## Office européen des brevets

(19)

(11) Publication number : **0 413 381 B1**

(12)

# EUROPEAN PATENT SPECIFICATION

(45) Date of publication of patent specification :
**19.11.92 Bulletin 92/47**

(51) Int. Cl.⁵ : **E04G 21/16**

(21) Application number : **90202081.7**

(22) Date of filing : **30.07.90**

(54) Method and device for arranging building panels.

(30) Priority : **18.08.89 NL 8902098**

(43) Date of publication of application :
**20.02.91 Bulletin 91/08**

(45) Publication of the grant of the patent :
**19.11.92 Bulletin 92/47**

(84) Designated Contracting States :
**AT BE CH DE DK ES FR GB GR IT LI LU NL SE**

(56) References cited :
**EP-A- 0 223 314**
**DE-A- 2 355 096**
**DE-A- 3 434 367**
**US-A- 1 519 037**
**US-A- 4 682 926**

(73) Proprietor : **Durox Nederland B.V.**
**Waaldijk 97**
**NL-4214 LC Vuren (NL)**

(72) Inventor : **Van Veen, Jan**
**Heymansweer 18**
**NL-3371 RJ Hardinxveld Giessendam (NL)**

(74) Representative : **Konings, Lucien Marie**
**Cornelis Joseph et al**
**OCTROOIBUREAU ARNOLD & SIEDSMA**
**Sweelinckplein 1**
**NL-2517 GK Den Haag (NL)**

EP 0 413 381 B1

Jouve, 18, rue Saint-Denis, 75001 PARIS

## Description

The invention relates in the first place to a method as indicated in the preamble of claim 1.

Such a method is known from a symposium held on October 26, 1988 in the TNO Products Centre, Oostsingel 209 in Delft. In the method "de eerste opzet" of page 49 the known method of the above kind uses a device in which the table carrier is pivotable about the main wheel axis. The supporting table and thus the building panel can not be lifted up to an appropriate level for working on the building panel in an ergonomically responsible manner. After turning the supporting table with the building panel relative to the table carrier the building plate is in an inclined position such that its center of gravity is still very low. A pneumatic cylinder is used for the tilting operation of positioning the building panel vertical. This pneumatic cylinder requires air-feedlines between a compressor and said cylinder, which makes this device impractical.

The invention provides a method which is more practical. To this end the method according to the invention has the characterising feature of claim 1.

The above symposium on page 55 "de derde opzet" as well as DE-A-2 355 046 disclose a method which is almost the same as the above described "eerste opzet"-method, with the exception that it does not use a lifting mechanism. The energy for tilting which should be delivered by the people is considerable. Further this method has the same disadvantage as the above described other known method that the device which is used is so large that its use would be impractical on small building surfaces.

DE-A-3 434 367 as well as "de tweede opzet" of the above symposium on pages 50-54 disclose a method in which two implements are used for carrying out all manipulations on the building panel. This is not easy, particularly not on small building surfaces.

EP-A-0 223 314 discloses a method in which the supporting table is swung about an axis which is substantially horizontal and which is perpendicular to the wheel axis of the chassis. This device can not easily be brought close to the building panel to be picked up. Further this method requires too much tilting energy of people doing the job.

US-A-1 519 037 discloses a method of erecting a building panel which has already been arranged before at high level above the ground in horizontal position. Therein a truck is used having a lift mechanism which tilts the building panel while its main wheels are lifted from the ground. It does not teach a method for picking up building panels standing on their longitudinal sides.

US-A-4 682 926 discloses a truck for mounting ceiling plates in tunnels. This truck has a supporting table turnable about an axis perpendicular to the plane of the support table, relative to a tabel carrier which is lifted by means of a lifting mechanism in order to mount the ceiling plate in horizontal position transversely to the tunnel direction after receipt thereof in horizontal position at lower level and in longitudinal tunnel direction.

If the feature of claim 2 is applied the building panel is handled more efficiently.

If the building panel is raised together with the supporting table relative to the chassis and is worked on at this work level the work is carried out in an ergonomically responsible manner.

If after being worked on at work level $\underline{h}$ the building panel is raised to a still higher tilting level the tilting force to be applied by the operative personnel is smaller.

The invention also relates to and provides a device according to the invention whereof the characteristics and preferred features are designated in claims 5 to 8.

The invention will be elucidated in the description following hereinafter with reference to a drawing of a non-limiting embodiment. In the drawing in schematic form:

Fig. 1 shows a perspective view of a device with a series of building panels during performing of a first step of the method according to the invention;

fig. 2 shows on a larger scale a perspective view of detail II of fig. 1; and

fig. 3-9 show successive side views of the device of fig. 1 during performing of the preferred method according to the invention.

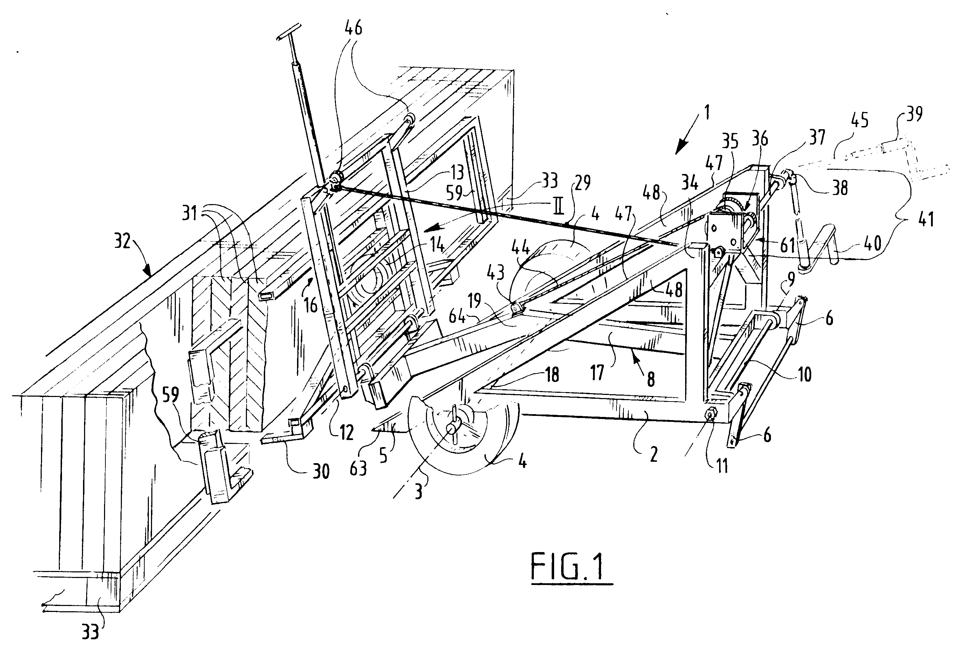

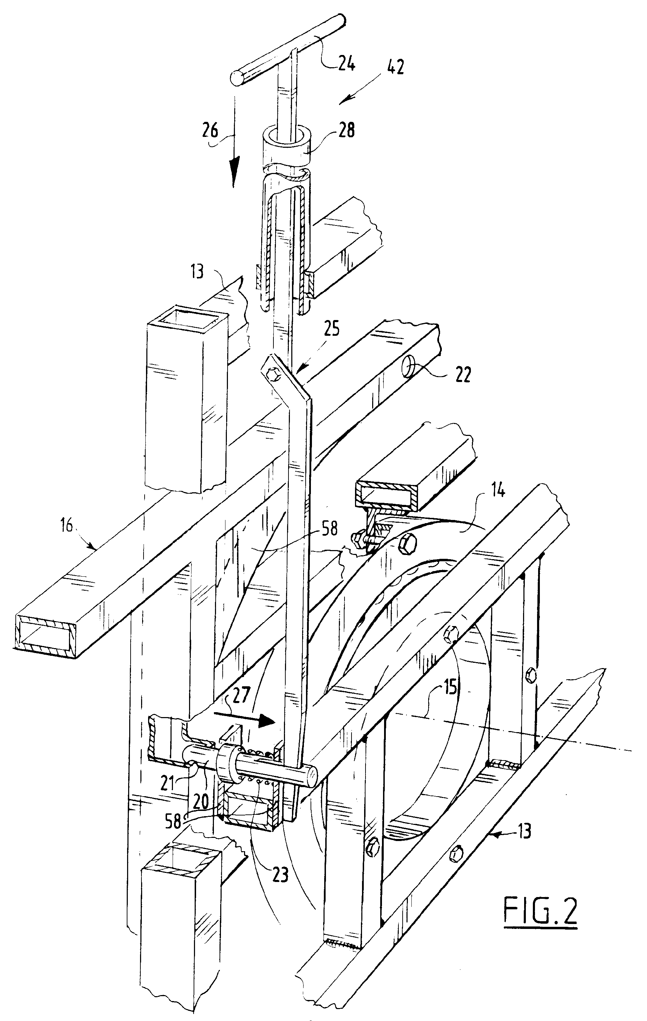

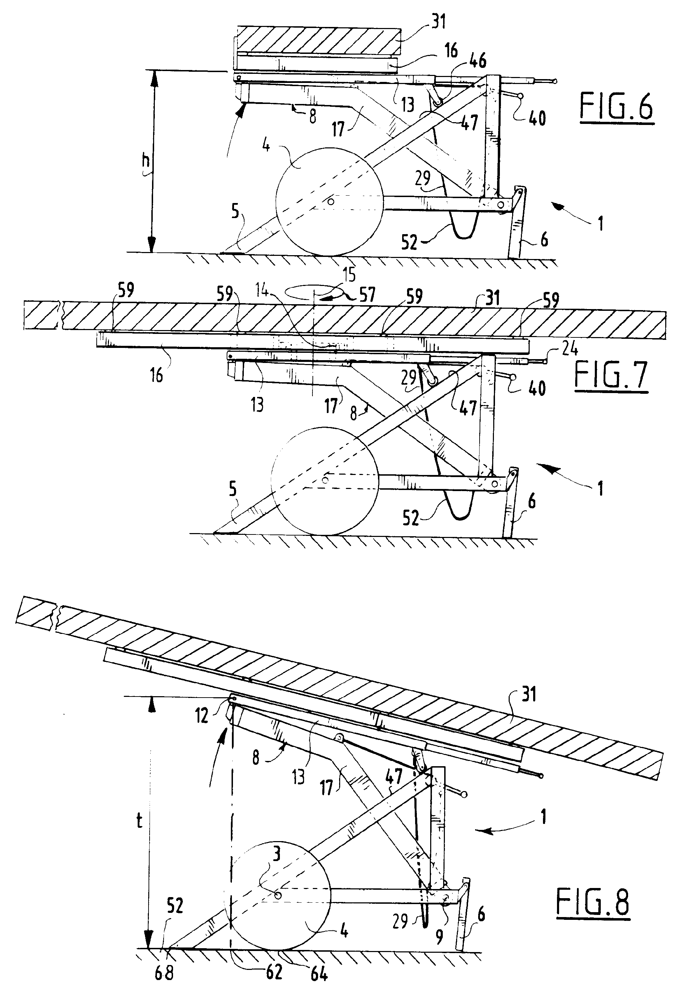

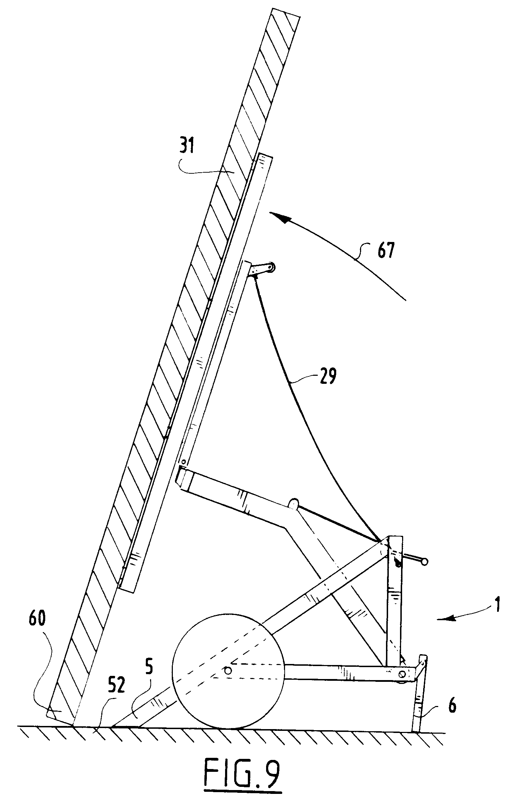

The device 1 according to the invention comprises a chassis 2 with a substantially triangular side view and is provided with two chassis wheels 4 rotatable on an axis 3, two fixed front legs protruding forwardly of the chassis wheels and two mutually connected rear legs 6 connected pivotally to the chassis 2. The device 1 further comprises swivel carrier 8 that is releasably connected to the chassis for pivoting about an axis 9 using a bolt 10 with nut 11 and which is connected for pivoting about an axis 12 to a table carrier 13 which bears a supporting table 16 via a rotary crown 14 with an axis of rotation 15. The swivel carrier 8 is I-shaped as seen from above, while the longitudinal beam 17 has a downward bend 19 above the shaft 18 of the chassis wheels 4. The supporting table 16 has two locking holes 21 and 22 for receiving a locking pin 20 in respectively a supporting table take-up position (fig. 1-6) and a supporting table delivery position rotated through 90° (fig. 8 and 9).

The locking pin 20 is constrained into the holes 21 and 22 by means of a pressure spring 23 and can be retracted according to arrows 27 by a handle 24 via rod system 25.

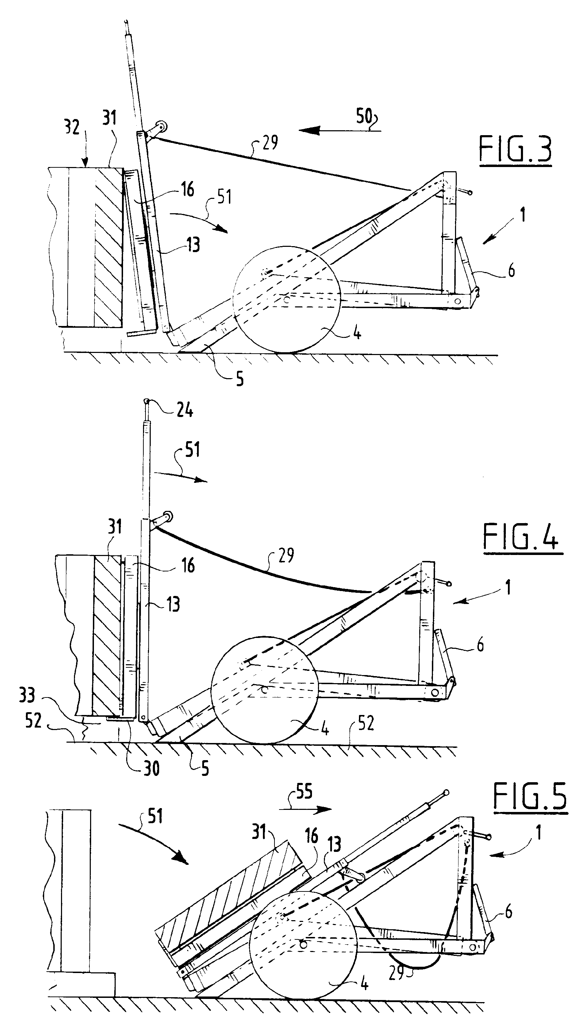

The handle 27 is slidable for this purpose according to arrow 26 in a protruding tube 28 fixed to the table carrier 13. The maximum pivoting position of the table carrier 13 with respect to the chassis 2 is bounded by a chain 29 which is stretched tight in figures 1 and 3. The supporting table 16 has at its bottom in figures 1 and 3 a protruding edge 30 consisting for instance of two teeth with which the supporting table 16 can grip under a foremost building panel 31 of a series 32 of building panels that is disposed for instance on two pallets 33 on a house floor of a building frame.

The chassis 2 has a winch drum 35 mounted rotatably in its top rear corner 34 and coupled via a drive gear 36 to a shaft 37 to which a handle 40 with a hand tube 39 is connected via a cardan joint 38 and a long shaft 45. This hand winch of this lifting mechanism 41 is self-braking and can be moved easily with little force for raising the supporting table 16 with a building panel 31 of concrete, gas concrete or other material lying thereon, since the winch cable 44 runs from the drum 35 to a lug 43 arranged precisely above the bend.

The table carrier 13 supports by means of two rollers 46 on an inclined roller guiding 47 formed by two chassis beams 48 oriented sloping upward and rearward.

The method according to the invention is preferably performed in the steps shown hereinafter in figures 3-9. As in fig. 3 the device 1 is moved according to arrow 50 to the series 32 while the supporting table 16 and the table carrier 13 are held pivoted forward with the chain 29 until the supporting table 16 strikes against the foremost building panel 31.

The supporting table 16 with table carrier 13 then pivots back according to arrow 51, while with a slightly further forward movement according to arrow 50 the protruding edge 30 moves under this building panel 31 which stands for instance on two pallets 33 10 cm above the floor 52. During the operations of figures 3 and 4 the front legs 5 slide if necessary with small bearing force over the floor 52.

The table carrier 13 is subsequently pulled over in arrow direction 51 on handle 24 together with supporting table 16 and building panel 31 and the device 1 is moved away from the series 32 according to arrow 55.

As in fig. 6 the rear legs 6 are carried downward, the device 1 is placed on all its legs 5 and 6 so that the chassis wheels 4 provided with pneumatic tyres are practically relieved and the swivel carrier 8 is thereafter swivelled upward with the handle 40, wherein the rollers 46 roll upward over their roller guiding 47 and the supporting table 16 moves to working level, that is, to a height $h$ of for example 75 cm above the floor.

The supporting table 16 is subsequently turned according to arrow 57 through 90° relative to the table carrier 13, wherein the lock 42 is manipulated in the releasing relative to hole 21. Locking with hole 22 takes place automatically by means of spring 23 which presses the locking pin 20 sliding over a pin guiding 58 into the hole 22.

In the position of fig. 7 the building panel 31 is easy to work on. A piece can for instance be sawn off with a hand circular saw along a saw cut parallel to the long side, or a passage for a pipe can be cut out. To this end the supporting table 16 preferably has four replaceable wooden support members 59.

After the optional working(s) of the building panel 31 the swivel carrier 8 is swivelled upward to a still higher level, this preferably until the swivel axis 12 has a level $t$ above the floor 52 such that when swivelled about the raised axis 12 the building panel 31 arrives in the sheer position of fig. 9 with its bottom edge 60 on the floor 52, this close to the front legs 5. During this tilting according to arrow 67 the building panel 31 is held in position by hand, while the device 1 rests with its front legs 5 on the floor 52. The lifting moment is small due to the small eccentricity of the building panel relative to the axis 12. This operation is therefore not strenuous. Finally, the building panel 31 is fixed in vertical position and a subsequent building panel 31 is arranged with the device 1.

It should be noted that the projection 62 of the axis 12 lies between the foremost support point 68 of the front legs 5 and the support points 64 of the chassis wheels 4, whereby a good stability is ensured during tilting.

## Claims

1. Method for arranging building panels (31) in a building frame, wherein use is made of a device (1) for arranging building panels (31), at least comprising a chassis (2) provided with chassis wheels (4) and a supporting table (16) turnable relative to a table carrier (13) about an axis (15) perpendicular to the plane of the supporting table (16), a lift mechanism (17, 29, 36, 41) being arranged between said tabel carrier (13) and said chassis (2), for tilting the table carrier (13) relative to the chassis (2) wherein a series (32) of building panels (31) lying adjacently on their long edges is disposed in a compartment of a building frame, wherein the series (32) rests with its ends on two supports (33) arranged at a mutual interval and wherein one building panel (31) at a time is removed from the series (32) by positioning said device (1) near this building panel (31) with a front side of the chassis (2) facing this building panel (31) and by placing a protruding edge (30) of the supporting table (16) under this building panel (31) between the supports (33) and removing the supporting table (16) together with this building panel (31) from the series (32), wherein the supporting table (16) is tilted with the building panel (31) into a lying position and turned about said axis (15) relative to said table carrier (13) and wherein the building panel (31) is disposed in its position in the building frame with its long side upright by tilting the building panel (31) together with the supporting table (16), characterized in that said table carrier (13) together with the supporting table (16) and building panel (31) is lifted from low level relative to all wheels of the chassis (2) by means of a lift mechanism (17, 29, 36, 41) operating between said table carrier (13) and chassis (2) and that the table carrier (13), the supporting table (16) and the building panel (31) are also moved relative to the chassis (2) in the direction towards the rear side of the chassis (2).

2. Method as claimed in claim 1, characterized in that during picking up of the building panel (31) the supporting table (16) is pivoted relative to the chassis (2) on an axis (9) which is parallel to the axis (3) of the chassis wheels (4) and which lies behind the latter axis (3).

3. Method as claimed in claim 1 or 2, characterized in that the building panel (31) is raised onto work level $h$ relative to the chassis (2) together with the supporting table (16) and is worked on at said level.

4. Method as claimed in claim 3, characterized in that after being worked on at work level $h$ the building panel (31) is raised to a still higher tilt level.

5. Device (1) for arranging building panels (31) in a building frame using the method as claimed in any of the foregoing claims, comprising a chassis (2) provided with chassis wheels (4) and a supporting table (16) tiltable relative to the chassis (2), turnable relative to a table carrier (13) about an axis (15) perpendicular of the supporting table (16) and provided with a protruding edge (30), said table carrier (13) being tiltable relative to the chassis (2) by means of a lift mechanism (17, 29, 36, 41), characterized in that said table carrier (13) together with the supporting table (16) is liftable from low level relative to all wheels (4) of the chassis (2) by means of a lift mechanism (17, 29, 36, 41) operating between table carrier (13) and chassis (2) and that the table carrier (13) together with supporting table (16) is movable relative to the chassis (2) in the direction towards the rear side of the chassis (2).

6. Device (1) as claimed in claim 5, characterized in that the supporting table (16) is disposable substantially horizontally at work level $h$ and is preferably liftable above work level $h$.

7. Device (1) as claimed in claim 5 or 6, characterized in that the lift mechanism (17, 29, 36, 41) comprises a swivel carrier (8) that is swivellable on the one hand relative to the chassis (2) and on the other relative to the table carrier (13).

8. Device (1) as claimed in any of the claims 5-7, characterized in that the table carrier (13) is connected pivotally about a horizontal tilt axis (12) to a swivel carrier (8) positioned rearwardly of the wheel axis (3).

9. Device (1) as claimed in any of the claims 5-8, characterized in that the chassis (2) is provided with at least one front leg (5) and that the projection (62) of a tilt axis (12) of the table carrier (13) parallel to the carrying wheel axis (3) lies between the support points (63, 64) of respectively the front leg (5) and the carrying wheels (4).

10. Device (1) as claimed in any of the claims 5-9 characterized in that the table carrier (13) is supported by a swivel carrier (8) which is pivotable on a rear axis extending parallel to the wheel axis (3) and arranged at the rear end of the chassis (2), that the table carrier (13) is pivotable relative to the swivel carrier 8 on a front axis (12) extending parallel to the wheel axis (3) and that the supporting table (16) is carried via at least one supporting roller (46) by a preferably inclined roller guiding (47) arranged on the chassis (2).

**Patentansprüche**

1. Verfahren zur Montage von Paneelen (31) in einem Gebäuderahmen, wobei von einer Vorrichtung (1) zur Montage der Paneele (31) Gebrauch gemacht wird, die mindestens verfügt über ein Chassis (2), ausgestattet mit Chassisrädern (4), und über einen Tragtisch (16), der gegenüber einem Tischträger (13) um eine Achse (15) drehbar ist, die rechtwinklig zur Ebene des Tragtisches (16) verläuft, über einen Anhebemechanismus (17, 29, 36, 41), der zwischen dem Tischträger (13) und dem Chassis (2) angeordnet ist, zum Verschwenken des Tischträgers (13) gegenüber dem Chassis (2), wobei eine Reihe (32) von Paneelen (31) einander benachbart liegend auf ihren Längsrändern in einem Abteil eines Gebäuderahmens angeordnet ist, wobei die Reihe (32) mit ihren Enden auf zwei Stützen (33) aufliegt, die in einem gegenseitigen Abstand angeordnet sind, und wobei ein Paneel (31) einzeln von der Reihe (32) durch Positionieren der Vorrichtung (1) in der Nähe dieses Paneels (31) wegbewegt wird, wobei eine Vorderseite des Chassis (2) dem Paneel (31) zugewandt ist und indem ein vorstehender Rand (30) des Tragtisches (16) unter dieses Paneel (31) zwischen den Stützen (33) angeordnet wird und der Tragtisch (16) zusammen mit diesem Paneel (31) von der Reihe (32) wegbewegt wird, wobei der Tragtisch (16) mit dem Paneel (31) in eine liegende Position verschwenkt und um die Achse (15) gegenüber dem Tischträger (13) verschwenkt wird, und wobei das Paneel (31) in seiner Position auf dem Gebäuderahmen mit seiner Längsseite aufrecht angeordnet wird, indem das Paneel (31) zusammen mit dem Tragtisch (16) verschwenkt wird, dadurch gekennzeichnet, daß der Tischträger (13) zusammen mit dem Tragtisch (16) und dem Paneel (31) aus seiner geringen Höhe bezüglich aller Räder des Chassis (2) mittels eines Hebemechanismus (17, 29, 36, 41) angehoben wird, der zwischen dem Tragtisch (16) und dem Chassis (2) arbeitet, und daß der Tischträger (13), der Tragtisch (16) und das Paneel (31) gegenüber dem Chassis (2) in Richtung auf die Rückseite des Chassis (2) ebenfalls bewegt werden.

2. Verfahren nach Anspruch 1, dadurch gekennzeichnet, daß während des Aufnehmens des Paneels (31) der Tragtisch (16) gegenüber dem Chassis (2) an einer Achse (9) verschwenkt wird, die parallel zu der Achse (3) der Chassisräder (4) verläuft und die hinter der letztgenannten Achse (3) liegt.

3. Verfahren nach Anspruch 1 oder 2, dadurch gekennzeichnet, daß das Paneel (31) zu einer Arbeitshöhe h gegenüber dem Chassis (2) zusammen mit dem Tragtisch (16) angehoben und in dieser Höhe bearbeitet wird.

4. Verfahren nach Anspruch 3, dadurch gekennzeichnet, daß nach dem Bearbeiten in der Arbeitshöhe h das Paneel (31) zu einer noch größeren Schwenkhöhe angehoben wird.

5. Vorrichtung (1) zum Montieren von Paneelen (31) in einem Gebäuderahmen unter Verwendung des Verfahrens wie in irgendeinem der vorhergehenden Ansprüche beansprucht, umfassend ein Chassis (2), ausgestattet mit Chassisrädern (4) und einem Tragtisch (16), der gegenüber dem Chassis (2) verschwenkbar ist, gegenüber einem Tischträger (13) um eine Achse (15), die rechtwinklig zu dem Tragtisch (16) verläuft, drehbar und mit einem vorstehenden Rand (30) ausgestattet ist, wobei der Tischträger (13) gegenüber dem Chassis (2) mittels eines Hebemechanismus (17, 29, 36, 41) verschwenkbar ist, dadurch gekennzeichnet, daß der Tischträger (13) zusammen mit dem Tragtisch (16) aus einer geringen Höhe bezüglich aller Räder (4) des Chassis (2) mittels eines Hebemechanismus (17, 29, 36, 41) anhebbar ist, der zwischen dem Tischträger (13) und dem Chassis (2) arbeitet, und daß der Tischträger (13) zusammen mit dem Tragtisch (16) gegenüber dem Chassis (2) in Richtung auf die Rückseite des Chassis (2) bewegbar ist.

6. Vorrichtung (1) nach Anspruch 5, dadurch gekennzeichnet, daß der Tragtisch (16) im wesentlichen horizontal in einer Arbeitshöhe h angeordnet werden kann und vorzugsweise über die Arbeitshöhe h hinaus anhebbar ist.

7. Vorrichtung (1) nach Anspruch 5 oder 6, dadurch gekennzeichnet, daß der Hebemechanismus (17, 29, 36, 41) über einen Schwenkträger (8) verfügt, der einerseits gegenüber dem Chassis (2) und andererseits gegenüber dem Tragtisch (13) verschwenkbar ist.

8. Vorrichtung (1) nach irgendeinem der Ansprüche 5-7, dadurch gekennzeichnet, daß der Tischträger (13) schwenkbeweglich um eine horizontale Schwenkachse (12) mit einem Schwenkträger (8) verbunden ist, der rückseitig der Radachse (3) angeordnet ist.

9. Vorrichtung (1) nach irgendeinem der Ansprüche 5-8, dadurch gekennzeichnet, daß das Chassis (2) mit mindestens einem Vorderbein (5) ausgestattet ist und daß die Projektion (62) einer Schwenkachse (12) des Tischträgers (13) parallel zu der tragenden Radachse (3) zwischen den Stützpunkten (63, 64) des Vorderbeins (5) bzw. der tragenden Räder (4) liegt.

10. Vorrichtung (1) nach irgendeinem der Ansprüche 5-9, dadurch gekennzeichnet, daß der Tischträger (13) von einem Schwenkträger (8) getragen ist, der um eine rückwärtige Achse verschwenkbar ist, die sich parallel zu der Radachse (3) erstreckt und am rückwärtigen Ende des Chassis (2) angeordnet ist, daß der Tischträger (13) gegenüber dem Schwenkträger (8) um eine vordere Achse (12) verschwenkbar ist, die sich parallel zu der Radachse (3) erstreckt, und daß der Tragtisch (16) über mindestens eine Stützrolle (46) mittels einer bevorzugterweise geneigten Rollenführung (47), die an dem Chassis (2) angeordnet ist, getragen ist.

**Revendications**

1. Procédé permettant de disposer des panneaux de construction (31) dans une charpente de construction, dans lequel on utilise un dispositif (1) pour disposer des panneaux (31), comprenant au moins un châssis (2) muni de roues (4) de châssis et une table de soutènement (16) pouvant tourner par rapport à un support de table (13) autour d'un axe (15) perpendiculaire au plan de la table de soutènement (16), un mécanisme de levage (17, 29, 36, 41) étant disposé entre ledit support de table (13) et ledit châssis (2) pour permettre l'inclinaison du support de table (13) par rapport au châssis (2), dans lequel une série (32) de panneaux (31) reposant tout en étant adjacents sur leurs bords longitudinaux est disposée dans un compartiment d'une charpente de construction, dans lequel la série (32) reposant par ses extrémités sur deux supports (33) situés à une certaine distance l'un de l'autre, et dans lequel un panneau (31) à la fois est prélevé de la série (32) par positionnement dudit dispositif (1) au voisinage de ce panneau (31), un côté avant du châssis (2) étant face à face avec ce panneau (31), et en plaçant un bord en saillie (30) de la table de soutènement (16) en dessous de ce panneau (31) entre les supports (33) et la table de soutènement (16) avec ce panneau (31) prélevé de la série (32), dans lequel la table de soutènement (16) est inclinée avec le panneau (31) dans une position horizontale et tourne autour dudit axe (15) par rapport au dit support de table (13) et dans lequel le panneau (31) de construction est disposé en position dans la charpente de construction, son côté longitudinal étant dirigé vers le haut, par inclinaison du panneau (31) en même temps que la table de soutènement (16), caractérisé en ce que ledit support de table (13) en même temps que la table de soutènement (16) et le panneau (31) est soulevé d'un niveau inférieur par rapport à toutes les roues du châssis (2) au moyen d'un mécanisme de levage (17, 29, 36, 41) fonctionnant entre ledit support de table (13) et le châssis (2), et en ce que le support de table (13), la table de soutènement (16) et le panneau (31) se déplacent également par rapport au châssis (2) dans la direction allant vers le côté arrière du châssis (2).

2. Procédé selon la revendication 1, caractérisé en ce que, au cours de la saisie du panneau (31), la table de soutènement (16) pivote par rapport au châssis (2) autour d'un axe (9) parallèle à l'axe (3) des roues (4) de châssis et qui se trouve en arrière de ce dernier axe (3).

3. Procédé selon la revendication 1 ou 2, caractérisé en ce que le panneau (31) est soulevé jusqu'au niveau de travail h par rapport au châssis (2) en même temps que la table de soutènement (16) et est usiné à ce niveau.

4. Procédé selon la revendication 3, caractérisé en ce que, après usinage au niveau de travail h, le panneau (31) est soulevé à une hauteur d'inclinaison encore plus élevée.

5. Dispositif (1) destiné à mettre en place des panneaux (31) de construction dans une charpente de construction, par utilisation du procédé selon l'une quelconque des revendications précédentes, comprenant un châssis (2) muni de roues (4) de châssis et d'une table de soutènement (16) pouvant s'incliner par rapport au châssis (2) et pouvant tourner par rapport à un support de table (13) autour d'un axe (15) perpendiculairement à la table de soutènement (16) et muni d'un bord faisant saillie (30), ledit support de table (13) pouvant s'incliner par rapport au châssis (2) au moyen d'un mécanisme de levage (17, 29, 36, 41), caractérisé en ce que ledit support de table (13), avec la table de soutènement (16) peut être levé à partir d'un niveau inférieur par rapport à toutes les roues (4) du châssis (2) au moyen d'un mécanisme de levage (17, 29, 36, 41), fonctionnant entre le support de table (13) et le châssis (2) et en ce que le support de table (13), avec la table de soutènement (16) peut se déplacer par rapport au châssis (2) dans la direction allant vers le côté arrière du châssis (2).

6. Dispositif (1) selon la revendication 5, caractérisé en ce que la table de soutènement (16) peut être disposée d'une manière sensiblement horizontale au niveau de travail h et peut, de préférence, être levée au-dessus du niveau de travail h.

7. Dispositif (1) selon la revendication 5 ou 6, caractérisé en ce que le mécanisme de levage (17, 29, 36, 41) comprend un support de pivot (8) qui peut pivoter d'une part par rapport au châssis (2) et d'autre part par rapport au support de table (13).

8. Dispositif (1) selon l'une quelconque des revendications 5 à 7, caractérisé en ce que le support de table (13) est relié en pivotement autour d'un axe d'inclinaison horizontal (12) à un support de pivot (8) placé en arrière de l'axe (3) de roue.

9. Dispositif (1) selon l'une quelconque des revendications 5 à 8, caractérisé en ce que le châssis (2) est muni d'au moins un pied avant (5) et que la projection (62) d'un axe d'inclinaison (12) du support de table (13) parallèle à l'axe (3) de roue portante se trouve entre les points de soutènement (63, 64) respectivement du pied avant (5) et des roues portantes (4).

10. Dispositif (1) selon l'une quelconque des revendications 5 à 9, caractérisé en ce que le support de table (13) est soutenu par un support de pivot (8) pouvant pivoter autour d'un axe arrière s'étendant parallèlement à l'axe (3) de roue et disposé à l'extrémité arrière du châssis (2), en ce que le support de table (13) peut pivoter par rapport au support de pivot (8) sur un axe avant (12) s'étendant parallèlement à l'axe (3) de roue, et en ce que la table de soutènement (16) est soutenue par l'intermédiaire d'au moins un galet de soutènement (46) par un guidage à galet (47) de préférence incliné, disposé sur le châssis (2).

FIG.1

FIG.2

FIG.3

FIG.4

FIG.5

FIG.6

FIG.7

FIG.8

FIG.9